# EUROPEAN PATENT APPLICATION

(11) **EP 1 662 759 A1**
(43) Date of publication of application: **31.05.2006**
(21) Application number: 04028296.4
(22) Date of filing: 30.11.2004
(51) Int. Cl.: H04M 1/725, H04M 1/56

(54) **Media file provision**

(71) Applicant: Sony Ericsson Mobile Communications AB, 221 88 Lund (SE)
(72) Inventor: Olsson, Stefan, 224 64 Lund (SE); Andersson, Jonas, 226 48 Lund (SE)
(74) Representative: Dahnér, Christer

(57) **Abstract**

The present invention is directed towards solving the problem of providing additional information to a user of a telecommunication device (100,42) during setting up of a telecommunication connection, by presenting a media file to the first end user in depence of signal information directed towards the first end user. A method therefore comprises receiving selecting of a second user from the first end user (step 302), setting up the telecommuncication connection from the first end user to the second user (step 306), providing a media file (step 304), receiving a first signal information related to alerting the second user (step 308), and presenting the media file to the first end user in dependence of receiving the first signal information (step 312), such that the first end user can receive an enhanced experience during the setting up of the telecommunication connection.

## Description

The present invention relates in general to providing additional information to a user of a telecommunication device during setting up of a telecommunication connection from the user to another user.

### DESCRIPTION OF RELATED ART

Portable communication devices such as for instance mobile phones often contain a huge selection of functions and functionalities. Besides the obvious application, the phone, various other applications and functions may be included in a mobile phone, such as presenting pictures on a display, taking pictures by using a built-in camera, playing music files and even presenting video clips or files comprising audio information.

Moreover mobile phones can often be personalised, that is parameters can be set and selections can be made such that the mobile phone received properties that reflect the user's choise or preferences.

Down below it is presented one scenario in which the user of a mobile phone is not offered the vast variety of applications or functions but is presupposed to accept service output from the mobile phone.

In order to make a phone call by a user of a mobile phone, to a person, the user dials the persons phone number, selects the person from a phone book or may even use a voice recognition application to inform the mobile phone which phone number to connect to. Having dialled the phone number the mobile phone user is forwarded tone signalling information during setting up of the telecommunication connection between the user of the mobile phone and the person called.

This tone signalling information is dependent of the accessibility of the communication device of the called party. If the communication device of the called party is free, that is not in engaged in another call, one type of tone signalling information is forwarded to the calling party. If on the other hand the communication device of the called party is engaged, another type of tone signalling information is forwarded to the calling party. In case the setting up of the connection between the calling party to the called party is interrupted, a third type of tone signalling information may be heard by the calling party.

Being presented with simple tone signalling information, awaiting the called party to pick up the phone receiver and answer the call or awaiting other information, may be experienced as dull and/or old-fashioned, and does is no respect offer the calling party an amusing experience during the waiting time, despite all applications and functions being provided in the mobile phone.

However, it is known that some telecommunication operators can offer a service to a subscriber party B, wherein the service contains presenting music to a party A, in connection with party A calling subscriber party B. This service may be such that after party A has reached for instance a switchboard of subscriber party B, awaiting to be connected to the called person of subscriber party B, music is presented to the calling party A, until a person of subscriber party B for instance answers the call.

It is also known that some mobile phone operators of a party B can provide a service that encompasses providing adverstise information to party A, when party A is making a phone call to party B.

In both examples, tone signalling information is substituted with different information, which is then presented to the calling party A, when the calling party, party A, is calling the called party, party B.

It is a disadvantage that the information that is presented to the calling party, party A, when party A is calling party B, may not be decided by party A, but rather is set by party B or even the operator of the called party B.

There is thus a need for substituting for instance tone signalling information as presented to the calling party for information that can be selected by the calling party and that can provide an enhanced experience to the calling party, party A, when calling the called party, party B.

### SUMMARY OF THE INVENTION

The invention is directed towards solving the problem of providing additional information to a user of a telecommunication device during setting up of a telecommunication connection from the user to another user.

This is achieved by presenting a media file to the first end user in depence of signal information directed towards the first end user.

A first object of the present invention is to provide a method for providing a media file to the first end user during setting up of a telecommunication connection between the fist end user and a second user.

According to one aspect of this invention, this object is achieved by a method for providing additional information, during setting up of a telecommunication connection from a first end user, via a network to a second user, comprising receiving selecting of a second user from the first end user,setting up the telecommuncication connection from the first end user to the second user, providing a media file, receiving a first signal information related to alerting the second user, and presenting the media file to the first end user in dependence of receiving the first signal information, such that the first end user can receive an enhanced experience during the setting up of the telecommunication connection.

A second aspect of the present invention is directed towards a method including the features of the first aspect, wherein the step of presenting the media file comprises presenting the media file mixed with a second signal information to the first end user.

A third aspect of the present invention is directed towards a method including the features of the first aspect, further comprising ending providing the media file to the first end user in dependence of detecting ending information.

A fourth aspect of the present invention is directed towards a method including the features of the third aspect, in which detecting ending information comprises receiving connection information.

A fifth aspect of the present invention is directed towards a method including the features of the third aspect, in which detecting ending information comprises receiving on hook information for the first end user.

A sixth aspect of the present invention is directed towards a method including the features of the second aspect, in which the second signal information comprises a tone signal.

A seventh aspect of the present invention is directed towards a method including the features of the second aspect, in which the second signal information is attenuated with respect to the media file.

An eighth aspect of the present invention is directed towards a method including the features of the first aspect, wherein the media file is a music file.

A ninth aspect of the present invention is directed towards a method including the features of the first aspect, in which the step of providing a media file comprises providing a media file related to the second end user.

A second object of the present invention is to provide a communication device for providing a media file to the first end user during setting up of a telecommunication connection between the fist end user and a second user.

According to a tenth aspect of this invention, this object is achieved by an end user communication device for providing additional information to a first end user during setting up of a telecommunication connection between the first end user and a second user via a network, said end user communication device comprising a user input unit, arranged to receive user input from the first end user, a signal unit, arranged to receive signal information from the network, a transceiving unit, connected to the signal unit, and arranged to transmit information to and receive information from the network, an information presentation unit, arranged to present information to the first user, and a control unit, connected to user input unit, the signal unit, the transceiving unit, and arranged to control receiving selecting of a second user from the first end user, setting up the telecommuncication connection from the first end user to the second user, providing a media file, receiving a first signal information related to alerting the second user, and presenting the media file to the first end user in dependence of receiving the first signal information,
such that the first end user can receive an enhanced experience during the setting up of the telecommunication connection.

An eleventh aspect of the present invention is directed towards an end user communication device including the features of the tenth aspect, further comprising a mixing unit connected to the signal unit and arranged to mix the media file and the second signal information.

A twelfth aspect of the present invention is directed towards an end user communication device including the features of the eleventh aspect, in which the mixing unit comprises a second signal information attenuating functionality.

A thirteenth aspect of the present invention is directed towards an end user communication device including the features of the eleventh aspect, in which the user input unit comprises a on hook/off hook functionality.

A fourteenth aspect of the present invention is directed towards an end user communication device including the features of the tenth aspect, further comprising a memory unit connected to the control unit and the mixing unit, wherein said memory unit is arranged to comprise media file information.

A fifteenth aspect of the present invention is directed towards an end user communication device including the features of the tenth aspect, in which the end user communication device is a portable communication device.

A sixteenth aspect of the present invention is directed towards an end user communication device including the features of the fifteenth aspect, in which the portable communication device is a mobile phone.

A third object of the present invention is to provide a computer program product for providing a media file to the first end user during setting up of a telecommunication connection between the fist end user and a second user.

According to a seventeenth aspect of this invention, this object is achieved by a computer program product comprising a computer readable medium, having thereon computer program code means, to make an end user communication device or a computer execute, when said computer program code means is loaded in end user communication device or the computer, receiving of selecting of a second user from the first end user, during setting up of a telecommunication connection from a first end user, via a network to the second user, setting up the telecommuncication connection from the first end user to the second user, providing of a media file, receiving a first signal information related to alerting the second user, and presenting of the media file to the first end user in dependence of receiving the first signal information, such that the first end user can receive an enhanced experience during the setting up of the telecommunication connection.

### The present invention has the following advantages:

It is clearly an advantage to provide presenting a media file during setting up of a telecommunication connection, for forwardring tone signalling information to the user of a communication device.

The user is likely to more appreciate a presented media file than said tine signalling information. In this way the user of a comunication device can receive an enhanced experience.

It is also advantagesous that a calling party can receive an audio confirmation or a visual confirmation of to whom the calling is calling during setting up of a telecommunication connection to the called party. This is especially advantageous for disabled or blind people. It may also be an advantage to busy people, to people in a noisy enviroment when using the voice recognition function and to other people wishing to receive a confirmation of to whom the telecommunication connection is set up to.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows an end user communication device for providing additional information, according to one embodiment of the present invention,
fig. 2 shows a telecommunication system including an end user communication device for providing additional information according to the present invention,
fig. 3 presents a flow-chart of a method for providing additional information to a first end user during setting up of a telecommunication connection, according to one embodiment of the present invention,
fig. 4 schematically visualises a portable communication device, according to the present invention, and
fig. 5 depicts a computer program product for providing additional information to a first end user of an end user communication device during setting up of a telecommunication connection, according to one embodiment of the present invention.

### DETAILED DESCRIPTION OF THE EMBODIMENTS

The present invention relates to providing additional information to a user of an end user telecommunication device during setting up of a telecommunication connection between the end user telecommunication device and another telecommunication device.

Upon setting up of a telecommunication connection by using a telecommunication device, such as for example a mobile phone, by a user, the user is presented various tone signalling information in the mobile phone. Such tone signalling information is dependent on the accessibility of the communication device of the called party and therefore carry accessibility information. Nevertheless, such tone signalling information may be found dull to listen to and does certainly not provide the user with an amusing experience.

The present invention provides a functionality to substitute tone signalling information received when setting up a telecommuncation connection from the calling party to a called party, for a media file that is selected by the calling party.

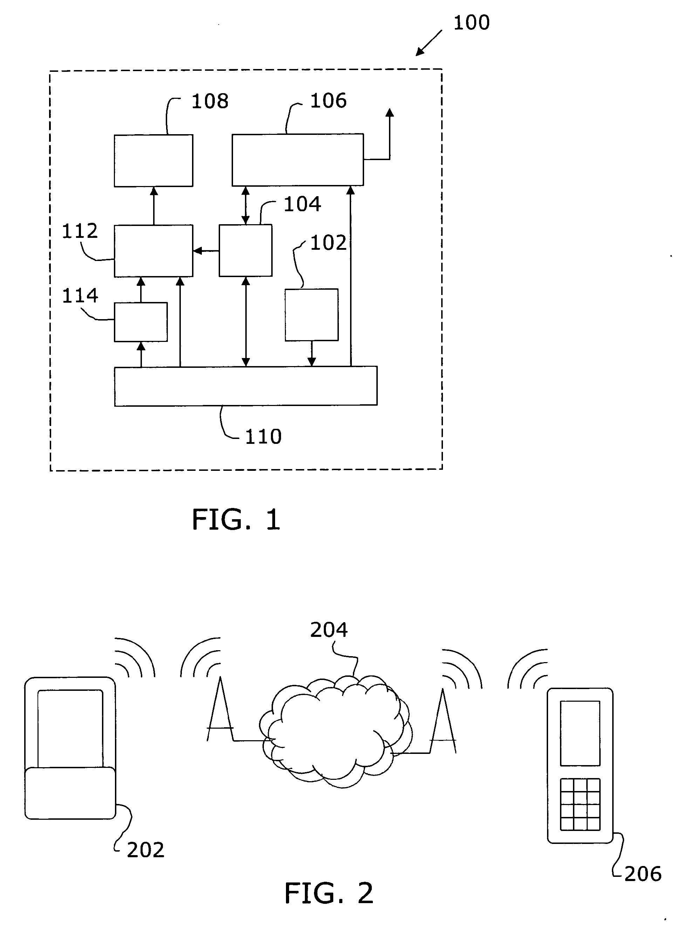

With reference to fig. 1, showing an end user communication device 100 for providing additional information, according to one embodiment of the present invention, the present invention is further described.

According to this embodiment of the present invention, the end user communication device comprises a user input unit 102 that is connected to a control unit 110. The user input unit is arranged to receive user input from the user of the end user communication device.

Within this example, the end user communication device is an end user portable communication device such as a mobile phone. It may however be any other type of end user communication device, such as a stationary telephone, a personal digital assistant (PDA), a palm top computer, a lap top computer, a stationary computer or other end user telecommunication devices.

Moreover, according to one embodiment of the present invention, the user input unit 102 is a key pad. According to an alternative embodiment of the present invention it may however be a touch screen or any other button or navigation key for receiving user input from the user of the mobile phone in this example.

The end user communication device 100 further comprises a signal unit 104, a transceiving unit 106, an information presentation unit 108, a mixing unit 112 and a memory unit 114, according to one embodiment of the present invention. The signal unit 104 is connected to the control unit 110, and is arranged to receive signal information from a network over which the telecommunication connection between the end user communication device and a second communication device, is set up. The signal unit 104 is also connected to the transceiving unit 106, that is arranged to receive data from and transmit data to the network or the second communication device. According to an alternative embodiment of the present invention, the transceiving unit 106 is separated into one receiving unit and one transmitting unit, where the receiving unit in this case is arranged to receive data from the network or the second communication device and the transmitting unit is arranged to transmit data to the network or the second communication device.

The memory unit 114 is also connected to the control unit 110 and is arranged to comprise media file information. This information may include pure audio files such as music files and ring signals to mention a few examples only, and mixed audio and video files, such as video clips with sound, and of course also pure video still pictures or motion pictures (video clips without audio). According to an alternative embodiment of the present invention the media file information may also include other types of files, such as any combination of different types of files such as combined video and vibration associated files, and which upon presenting may cause the end user communication to vibrate in one certain vibrational mode, out of a large number of different vibrational modes, or according to a certain vibration scheme, to give a few examples only.

The memory unit 114 is also connected to a mixing unit 112 that in itself further is connected to the signal unit 104. The mixing unit 112 is arranged to mix the media file being provided by the memory unit 114 and the tone signalling information as received by the signal unit 104. According to one embodiment of the present invention the mixing unit 112 is arranged to mix the audio signals from the tone signalling information as received by the signal unit 104 and an audio file, such as a music file provided from the memory unit 114. However, according to an alternative embodiment of the present invention the mixing unit 112 may mix tone signalling information and any media file, for instance the media files as are examplified above, into a mixed audio and video file.

In one alternative embodiment of the present invention, the mixing unit 112 comprises a analog/digital (A/D) converter and/or a digital/analog converter that may be used to convert tone signalling information from one type of signal to the other, in connection to mixing the media file and the received tone signalling information.

The information presentation unit 108 as comprised within the end user communication device 100, or in this example the mobile phone, is connected to the mixing unit 112, and is arranged to present informaton to the user of the mobile phone. According to one embodiment of the present invention, the information presentation unit 108 comprises a loudspeaker. It may however also comprise one or more displays for presenting visual information to the user. According to one alternative embodiment the information presentation unit may comprise a vibrator for providing vibrational information to the user.

Until now the present invention has been focused on the end user communication device, of which one example is presented in fig. 1.

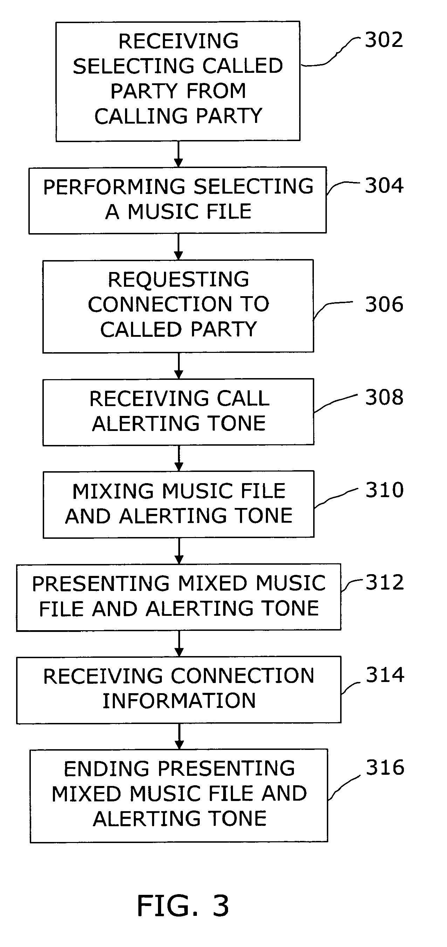

The present invention will from now on be explained in more detail while making reference to figs. 2 and 3, showing a telecommunication system comprising an end user communication device for providing additional information according to the present invention, and a flow-chart of a method for providing additional information to a first end user during setting up of a telecommunication connection, according to one embodiment of the present invention, respectively.

The system as presented in fig. 2 comprises an end user communication device 202, a second communication device 206, and communcation network 204, over which a telecommunication connection is set up. The system as presented in fig. 2 constitutes one embodiment of the present invention only. Within the present invention the end user communication device may be a stationary wired communication device communicating with an any communication device over any network(s) chosen from a plurality of different communication networks.

Within fig. 2, presenting a system according to one embodiment of the present invention only, it is illustrated communicating between the end user communication device 202 and a first base station within the network 204, and communicating between a second base station of the network 204 and the second communication device 206.

The method for providing additional information to a calling party, during setting up of a telecommunication connection from the calling party to a called party, starts with the step of receiving selecting called party from calling party, step 302. The end user communication device is within this example a portable end user communication device such as a mobile phone. As described above it may however be any other type of end user communication device, according to an alternative embodiment of the present invention.

Moreover, within this step of receiving selecting called party, the mobile phone may receive the selecting called party via a key pad, after dialling the phone number of the called party by the calling party. The mobile phone may also receive the selecting information from selecting being made by using a phone book within the mobile phone or even via a voice recognition functionality as may be implemented in the mobile phone. Other ways to receive selecting the called party from the calling party may also be available such as receiving selecting a default called party, as preset by the calling party.

The present invention offers a possibility to the user of an end user communication device to select a media file to be presented during setting up of a telecommunication connection between the user of the mobile phone and a user of a second communication device. It also provides the possibility to associate a specific media file, which media file is to be presented during setting up of a connection, with a specific phone number of the second communication device, to which the connection is set up. For this reason the user of the second communication device, the called person, may be associated a certain media file within the mobile phone of the calling person. For example, during setting up a phone call between the calling person and a first called person, the mobile phone of the calling person may present a first media file, such as for instance a certain music file, whereas during setting up a phone call between the calling person and a different called person, the mobile phone of the calling person may present a different media file, such as for instance another music file or a video clip, to mention a few examples only.

It is thus easy to imagine the advantages that the present invention provides over the ones of the functions and applications within the state of the art. As a specific media file may be presented during setting up of a telecommication connection to a specific called person, the calling person receives a confirmation of the chosen phone number. If the calling person for some reason dials an erroneous phone number, that is a non intended phone number, the calling person is thus not forwarded the media file that is associated with the intended person. and thus is noticed that an erroneous phone number was dialled. A confirmation of having chosen the person that the calling party intended to call, is thus not forwarded.

On the other hand, a confirmation of having chosen an intended phone number to an intended called person is thus forwarded to the calling person. This is an advantage that may be especially appreciated by disabled people or blind people.

According to one embodiment of the present invention it is the memory unit 114 that is arranged to comprise the media files. Media files may however also be comprised within other units of an end user communication device.

It is the control unit 110 that controls that the correct media file is selected by using the associations between the media files and the respective phone numbers. As mentioned earlier a phone book may here be used, where the phone book is provided with the media file selection functionality. Such a phone may be comprised within the memory uniy 114.

The user of the mobile phone may thus personlise his mobile phone by associating a specific media file with a certain phone number or person or even a group of phone numbers or persons.

Using these associations between media files and phone numbers/persons is explained below within the method for providing additional information to an end user during setting up a telecommunication connection between the first end user and a second user.

The next step in the method according to one embodiment of the present invention is the step of performing selecting a music file, step 304. Within this step it is the mobile phone of the calling party that uses the association as established above to select a media file, from information as received in step 302 of the method. Within this embodiment of the present invention it is a music file that is selected. As described earlier, the media file may however be any media file or a combination of two or more media files, having formats that are supported by the mobile phone.

The subsequent step in the method for providing additional information to an end user, is the step of requesting connection to the called party, step 306. Within this step it is the signal unit 104 under the control of the control unit 110, which transmits a request to performing a connection to the called party. According to one embodiment of the present invention, this request is typically transmitted by the transceiving unit 106 by using a suitable signalling channel. The usage of signalling channels when setting up of a telecommunication connection is well-known to persons skilled in the art, and will therefore not be described in detail in connection to the present invention.

The following step of the method for providing additional information, is step 308, the step of receiving call alerting tones, being one example of receiving a first signal information related to alerting the second user, that is the called person. Receiving a first signal information is typically performed on a signalling channel, for which the first signal information is a trigger/control signal that may contain information about that a second signal information is sent on a channel that may be different from the signalling channel. This different telecommunication channel may be a traffic channel that is established between the end user communication device and the second communication device, according to one embodiment of the present invention.

The first signal information may thus be used a trigger signal for the signal unit 104 to start forwarding the information of the traffic channel to the user of the mobile phone.

Thus, signalling information, such as trigger and control signals, is typically received on a signal channel, and may contain information about that a different signal information is sent and is about to be received on a different channel, which may be a traffic channel.

It is the signal unit 104 under the control of the control unit 110 which is arranged to listen to the different channels and to properly distribute relevant information of the sent signal information.

Whereas the first signal information typically is not forwarded to the user of the mobile phone, since this information typically comprise trigger and control signals, the second signal information may be forwarded to the user, according to one embodiment of the present invention. One example of this second signal information is the tone signalling information that is heard during waiting until the setting up of a telecommunication connection is completed. Another example of such a tone is the tone signalling information that may be heard in the phone by the callling person when calling a phone number to a second phone that is engaged in on-going call.

The second signal information may thus be described as an alerting tone, as mentioned above.

The first signal information is thus different from the second signal information not only with respect to the channel on which they are received, but also with respect to the information content contained in them two.

The subsequent step of the method for providing additional information to a user of a mobile phone, is the step of mixing music file and alerting tone, step 310. Within this step the selected music file, as one example of a media file, is thus mixed with the received alerting tone, being one example of the second signal information as received by the signal unit 104 and as typically received on a traffic channel. The music file is thus the music file that previously was defined by the user of the mobile phone and is associated with the called person. Within one alternative embodiment of the present invention, default music files may be associated to a variety of phone numbers/persons in the phone book.

The two audio files in this example, the alerting tone and the music file, may have different signal strengths. Mixing audio files having very different strenghts results in an audio file that is dominated by the strongest signal. Since it may be desirable to the user of the mobile phone to select which of the two audio signals to listen to, a functionality to adjust the signal strength of at least one of the two audio files may be appreciated.

According to one embodiment of the present invention, the alerting tone is therefore attenuated with respect to the provided music file, such that one measure of the signal strength of the alerting tone may be lower than one measure of the signal strength of the music file. The alerting tone may moreover be attenuated to a larger extent or even muted so that the music file totally dominates.

After the step of mixing the music file and the alerting tone, the step of presenting the mixed music and the alerting tone, step 312, is performed. For this example, in which the media file is a music file and the tone alerting is an audio file, the step of presenting the mixed file and alerting tone is performed by a loudspeaker, under the control of a control unit 104 connected to the mixing unit 112. The loudspeaker is thus one example of an information presentation unit 108.

In case the media file comprises audio and video information, the mixed information between the media file and the tone alerting, as one example of the second signal information, is presented by using a loudspeaker unit as well as a visual information presenting unit, such as a display, for presenting the video signals.

The subsequent step of the method for providing additional information is the step of receiving connection information, step 314. This information is typically received from the network over which the end user communication device is connected to the second communication device, on a suitable signal channel. This connection information may comprise information that the called user has answered the call by for instance picking the receiver. The connection between the two communications device, as requested in step 306, is thus confirmed by the network.

In one alternative, the connection information may moreover comprise signal information information sent from the mobile phone containing information on detecting on hook information for the user of the mobile phone, meaning that the user has hung up the receiver or rather pressed a hung up button on the mobile phone.

Eventually, the step of ending presenting the mixed music file and the alerting tone is performed in step 316, as for instance a consequence of having received a connection confirmation information from the network or as having detected on hook information in the mobile phone.

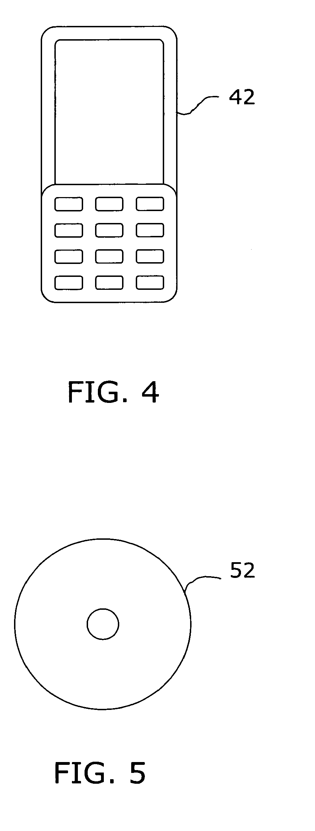

In order to present a portable communication device according to an alternative embodiment of the present invention, a mobile phone 42 is schematically visulised in fig. 4.

Moreover, fig. 5 schematically depicts a computer program product according to one embodiment of the present invention, having thereon computer program code means. When the computer program code means, comprised on the computer program product, is loaded in a computer or possibly an end user communication device, said computer or end user communication device, executes receiving of selecting of a second user from the first end user, during setting up of a telecommunication connection from a first end user, via a network to the second user, setting up the telecommuncication connection from the first end user to the second user, providing of a media file, receiving a first signal information related to alerting the second user, and presenting of the media file to the first end user in dependence of receiving the first signal information, such that the first end user can receive an enhanced experience during the setting up of the telecommunication connection.

The computer program product may be provided as a CD-ROM disc according to one embodiment of the present invention. However, the computer program product can alternatively be provided as another type of disc such as a DVD disc, a hard disc, an MD disc, or be provided as a memory or other storage capacity, such as a flash-based memory, for example a memory stick or a USB (Universal Serial Bus) memory or even a memory of the type being volatile.

It is emphasized that this invention can be varied in many ways, of which the alternative embodiments above only are examples of a few. These different embodiments are hence nonlimiting examples. The scope of the present invention, however, is only limited by the subsequently following claims.

### The described present invention thus carries the following advantages:

One advantage is to provide presenting a media file during setting up of a telecommunication connection, instead of forwardring tone signalling information to the user of a communication device.

The user is also likely to more appreciate a presented media file than said tine signalling information. In this way the user of a comunication device can receive an enhanced experience.

It is also advantagesous that a calling party can receive an audio confirmation or a visual confirmation of to whom the calling is calling during setting up of a telecommunication connection to the called party. This is especially advantageous for disabled or blind people. It may also be an advantage to busy people, to people in a noisy enviroment when using the voice recognition function and to other people wishing to receive a confirmation of to whom the telecommunication connection is set up to.

## Claims

1. Method for providing additional information, during setting up of a telecommunication connection from a first end user, via a network (204) to a second user, comprising the steps:
- receiving selecting of a second user from the first end user (step 302),
- setting up the telecommuncication connection from the first end user to the second user (step 306),
- providing a media file (step 304),
- receiving a first signal information related to alerting the second user (step 308), and
- presenting the media file to the first end user in dependence of receiving the first signal information (step 312),
such that the first end user can receive an enhanced experience during the setting up of the telecommunication connection.

2. Method for providing additional information according to claim 1, wherein the step of presenting the media file comprises presenting the media file mixed with a second signal information to the first end user (step 312).

3. Method for providing additional information, according to claims 1 or 2, further comprising the step:
- ending providing the media file to the first end user in dependence of detecting ending information (step 316).

4. Method for providing additional information, according to claim 3, in which detecting ending information comprises receiving connection information.

5. Method for providing additional information, according to claim 3, in which detecting ending information comprises receiving on hook information for the first end user.

6. Method for providing additional information, according to any one of claims 2 to 5, in which the second signal information comprises a tone signal.

7. Method for providing additional information, according to any one of claims 2 to 6, in which the second signal information is attenuated with respect to the media file.

8. Method for providing additional information, according to any one of claims 1 to 7, wherein the media file is a music file.

9. Method for providing additional information, according to any one of claims 1 to 8, in which the step of providing a media file comprises providing a media file related to the second end user.

10. End user communication device (100,42) for providing additional information to a first end user during setting up of a telecommunication connection between the first end user and a second user via a network (204), said end user communication device (100,42) comprising:
- a user input unit (102), arranged to receive user input from the first end user,
- a signal unit (104), arranged to receive signal information from the network (204),
- a transceiving unit (106), connected to the signal unit (104), and arranged to transmit information to and receive information from the network (204),
- an information presentation unit (108), arranged to present information to the first user, and
- a control unit (110), connected to user input unit (102), the signal unit (104), the transceiving unit (106), and
arranged to control receiving selecting of a second user from the first end user (step 302), setting up the telecommuncication connection from the first end user to the second user (step 306), providing a media file (step 304), receiving a first signal information related to alerting the second user (step 308), and presenting the media file to the first end user in dependence of receiving the first signal information (step 312),
such that the first end user can receive an enhanced experience during the setting up of the telecommunication connection.

11. End user communication device (100,42) according to claim 10, further comprising a mixing unit (112) connected to the signal unit (104) and arranged to mix the media file and the second signal information.

12. End user communication device (100,42) according to claim 11, in which the mixing unit (112) comprises a second signal information attenuating functionality.

13. End user communication device (100,42) according to claim 11 or 12, in which the user input unit (102) comprises a on hook/off hook functionality.

14. End user communication device (100,42) according to any one of claims 10 to 13, further comprising a memory unit (114) connected to the control unit (110) and the mixing unit (112), wherein said memory unit (114) is arranged to comprise media file information.

15. End user communication device (100,42) according to any one of claims 10 to 14, in which the end user communication device (100,42) is a portable communication device (42).

16. End user communication device (100,42) according to claim 15, in which the portable communication device (42) is a mobile phone (42).

17. A computer program product (52) comprising a computer readable medium, having thereon computer program code means, to make an end user communication device (100,42) or a computer execute, when said computer program code means is loaded in the end user communication device (100,42) or the computer:
- receiving of selecting of a second user from the first end user, during setting up of a telecommunication connection from a first end user, via a network (204) to the second user (step 302) ,
- setting up the telecommuncication connection from the first end user to the second user (step 306),
- providing of a media file (step 304),
- receiving a first signal information related to alerting the second user (step 308), and
- presenting of the media file to the first end user in dependence of receiving the first signal information (step 312),
such that the first end user can receive an enhanced experience during the setting up of the telecommunication connection.
